# EUROPÄISCHE PATENTSCHRIFT

(11) **EP 2 574 224 B1**
(45) Veröffentlichungstag und Bekanntmachung des Hinweises auf die Patenterteilung: **25.02.2015**
(21) Anmeldenummer: 12401191.7
(22) Anmeldetag: 24.09.2012
(51) Int. Cl.: A01C 15/00

(54) **Vorratsbehälter mit einer siebartigen Abdeck- und Schutzeinrichtung**
Hopper with a sieve-like cover and protection device
Tremie avec un dispositif de protection et de recouvrement de type tamis

(30) Priorität: 29.09.2011 DE 102011054034
(43) Veröffentlichungstag der Anmeldung: 03.04.2013
(73) Patentinhaber: Amazonen-Werke H. Dreyer GmbH & Co. KG, 49205 Hasbergen (DE)
(72) Erfinder: Hofter, Rainer, 49143 Bissendorf (DE); Walter, Achim, 49078 Osnabrück (DE)

(56) Entgegenhaltungen:
- EP-A1- 2 227 934
- WO-A1-98/09890
- DE-A1- 4 309 730
- DE-U1-202008 013 948

## Beschreibung

Die Erfindung betrifft einen Vorratsbehälter einer landwirtschaftlichen Maschine mit einer siebartigen Abdeck- und Schutzeinrichtung gemäß des Oberbegriffes des Patentanspruches 1.

Eine derartige siebartige Abdeck- und Schutzeinrichtung ist durch die DE 43 09 730 A1 bekannt. Diese Abdeck- und Schutzeinrichtung ist in dem Vorratsbehälter einer als Schleuderdüngerstreuer ausgebildeten Verteilmaschine oberhalb von motorisch angetriebenen Rührelementen angeordnet. Hierdurch ist der ungehinderte Zugang zu diesen Maschinenteilen unterbunden, so dass eine Verletzungsgefahr ausgeschlossen ist.

Diese Abdeck- und Schutzeinrichtung ist als ebene Fläche ausgebildet und somit instabil. Weiterhin bleiben klumpige auszubringende Materialteile auf der siebartigen Abdeck- und Schutzeinrichtung liegen und werden nicht zur Seite abgeleitet.

Der Erfindung liegt die Aufgabe zugrunde, eine in sich stabile Abdeck- und Schutzeinrichtung zu schaffen, welche vorstehende Nachteile nicht aufweist.

Diese Aufgabe wird erfindungsgemäß dadurch gelöst, dass die siebartige Abdeck- und Schutzeinrichtung zumindest auf ihrer Oberseite in ihrem Oberflächenbereich nach oben gewölbt ist.

Infolge dieser Maßnahme wird durch die gewölbte Ausgestaltung der siebartigen Abdeck- und Schutzeinrichtung eine große Stabilität der Abdeck- und Schutzeinrichtung erreicht. Weiterhin werden klumpige auszubringende Materialteile aufgrund der gewölbten Ausgestaltung der siebartigen Abdeck-Patentanmeldung_P11-063.doc / 35840 Byte / 10.07.12 09:36:21 und Schutzeinrichtung durch die Vibrationen der landwirtschaftlichen Verteilmaschine während des Ausbringbetriebes zur Seite abgeleitet.

Eine vorteilhafte Ausgestaltung der siebartige Abdeck- und Schutzeinrichtung läßt sich dadurch in einfacher erreichen, dass die siebartige Abdeck- und Schutzeinrichtung zumindest auf ihrer Oberseite zumindest annähernd die Form eines Kugelabschnittes aufweist.

Als vorteilhaft hat sich erwiesen, dass die siebartige Abdeck- und Schutzeinrichtung zumindest annähernd gewölbeartig ausgebildet ist.

Bei einer siebartigen Abdeck- und Schutzeinrichtung, die sich kreuzende Stege zwischen den Durchbrüchen aufweist, ist vorteilhaft, dass die Höhe der Stege größer als deren Breite ist.

Weitere Einzelheiten der Erfindung sind der Beispielsbeschreibung und den Zeichnungen zu entnehmen.

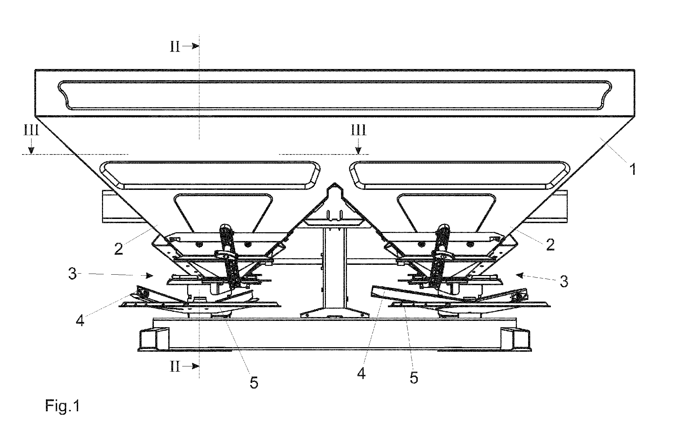

Hierbei zeigen
- Fig.1: eine als Zweischeibenschleuderstreuer ausgebildete landwirtschaftliche Verteilmaschine in der Ansicht von hinten und in Prinzipdarstellung,

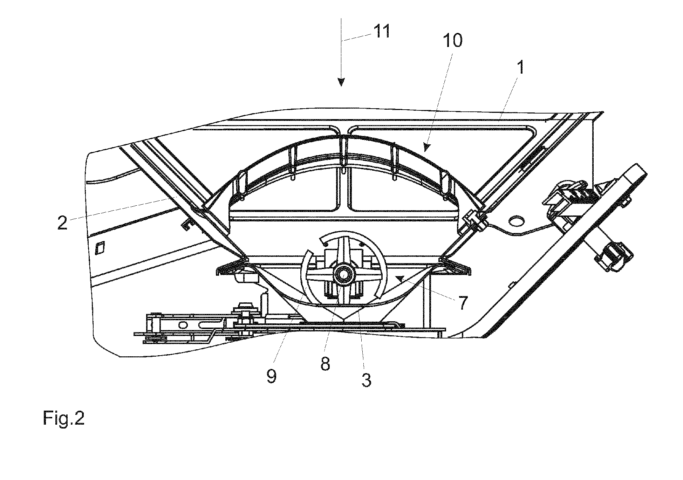

- Fig.2: den unteren Trichterbereich des Vorratsbehälters des Schleuderstreuers im Schnitt II - II und

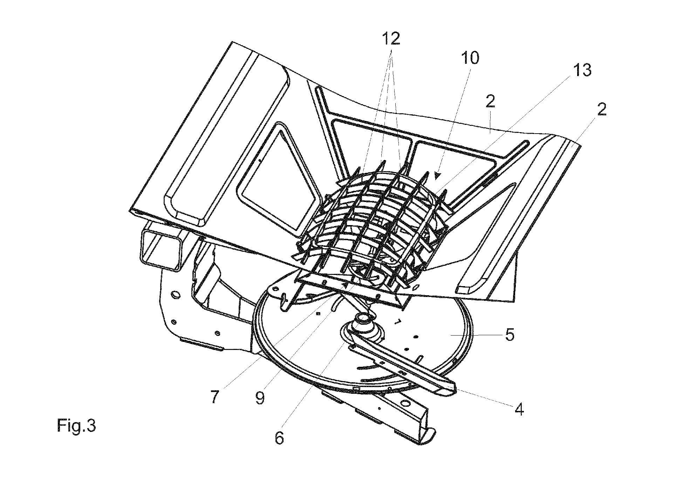

- Fig.3: den unteren Trichterbereich des Vorratsbehälters des Schleuderstreuers in perspektivischer Ansicht III - III.

Die als Zweischeibenschleuderstreuer ausgebildete landwirtschaftliche Verteilmaschine zur Ausbringung von Streugut, insbesondere Mineraldünger in der Landwirtschaft weist den Vorratsbehäter 1 auf, der zwei sich trichterförmig nach unten verjüngende Auslauftrichter 2 aufweist. Die Auslauftrichter 2 sind jeweils durch eine Dosiereinrichtung 3 abgeschlossen. Unterhalb der Dosiereinrichtung 3 ist jeweils eine mittels eines motorischen Antriebes rotierend angetriebene und mit Wurfflügeln 4 besetzte Schleuderscheibe 5 auf der Antriebswelle 6 angeordnet. In dem unteren Bereich jedes Auslauftrichters 2 oberhalb der Dosiereinrichtung 3 befindet sich das motorische angetriebene Maschinenteil, welches als Rührorgan 7 ausgebildet ist. Das Rührorgan 7 weist die jeweils in den unteren Bereich jedes Auslauftrichters 2 des Vorratsbehälters ragende, drehbar angetriebene Rührwelle 8 auf. Die Rührwelle 8 trägt die Rührelemente 9, welche im unteren Bereich des Vorratsbehälters 2 oberhalb der Dosiereinrichtung 3 wirksam sind.

Oberhalb des Rührorgans 7 ist in jedem Auslauftrichter 2 eine siebartige Abdeck- und Schutzeinrichtung 10, die den Zugang zu dem als angetriebene Maschinenteile ausgebildeten Rührorgan 7 verhindert, angeordnet. Die siebartige Abdeck-und Schutzeinrichtung 10 ist zumindest auf ihrer Oberseite in ihrem Oberflächenbereich nach oben gewölbt. Hierdurch ergibt sich eine große Stabilität der Einrichtung 10. So wird sie nicht nach unten durchgedrückt, wenn sie von oben gemäß Pfeilrichtung 11 stark belastet wird, wenn beispielsweise der Anwender in unzulässiger Weise auf die Einrichtung 10 tritt.

Die siebartige Abdeck- und Schutzeinrichtung 10 weist zumindest auf ihrer Oberseite zumindest annähernd die Form eines Kugelabschnittes auf und ist zumindest annähernd gewölbeartig ausgebildet ist. Weiterhin werden klumpige auszubringende Materialteile aufgrund der gewölbten Ausgestaltung der siebartigen Abdeck- und Schutzeinrichtung 10 durch die Vibrationen der landwirtschaftlichen Verteilmaschine während des Ausbringbetriebes zur Seite abgeleitet.

Die siebartige Abdeck- und Schutzeinrichtung 10 weist sich kreuzende Stege 12 zwischen den Durchbrüchen 13 auf. Die Höhe der Stege ist größer als deren Breite.

## Patentansprüche

1. Vorratsbehälter für eine landwirtschaftliche Verteilmaschine mit einer siebartigen Abdeck- und Schutzeinrichtung, die den Zugang zu insbesondere angetriebenen Maschinenteile verhindert und oberhalb der insbesondere angetriebenen Maschinenteile im unteren Bereich des Vorratsbehälter angeordnet ist, **dadurch gekennzeichnet, dass** die siebartige Abdeck- und Schutzeinrichtung (10) zumindest auf ihrer Oberseite in ihrem Oberflächenbereich nach oben gewölbt ist.

2. Vorratsbehälter für eine landwirtschaftliche Verteilmaschine mit einer siebartigen Abdeck- und Schutzeinrichtung nach Anspruch 1, **dadurch gekennzeichnet, dass** die siebartige Abdeck- und Schutzeinrichtung (10) zumindest auf ihrer Oberseite zumindest annähernd die Form eines Kugelabschnittes aufweist.

3. Vorratsbehälter für eine landwirtschaftliche Verteilmaschine mit einer siebartigen Abdeck- und Schutzeinrichtung nach zumindest einem der vorstehenden Ansprüche, **dadurch gekennzeichnet, dass** die siebartige Abdeck- und Schutzeinrichtung (10) zumindest annähernd gewölbeartig ausgebildet ist.

4. Vorratsbehälter für eine landwirtschaftliche Verteilmaschine mit einer siebartigen Abdeck- und Schutzeinrichtung nach zumindest einem der vorstehenden Ansprüche, wobei die siebartige Abdeck- und Schutzeinrichtung (10) sich kreuzende Stege (12) zwischen den Durchbrüchen (13) aufweist, **dadurch gekennzeichnet, dass** die Höhe der Stege (12) größer als deren Breite ist.

## Claims

1. Hopper for an agricultural distribution machine with a sieve-like cover and protection device which prevents access to in particular driven machine parts and is arranged in the lower region of the hopper above the in particular driven machine parts, **characterized in that** at least the upper side of the sieve-like cover and protection device (10) is arched upwards in the surface region thereof.

2. Hopper for an agricultural distribution machine with a sieve-like cover and protection device according to Claim 1, **characterized in that** at least the upper side of the sieve-like cover and protection device (10) has at least approximately the shape of a spherical section.

3. Hopper for an agricultural distribution machine with a sieve-like cover and protection device according to at least one of the preceding claims, **characterized in that** the sieve-like cover and protection device (10) is designed at least approximately in the manner of an arch.

4. Hopper for an agricultural distribution machine with a sieve-like cover and protection device according to at least one of the preceding claims, wherein the sieve-like cover and protection device (10) has intersecting webs (12) between the apertures (13), **characterized in that** the height of the webs (12) is greater than the width thereof.

## Revendications

1. Réservoir pour un épandeur agricole, comprenant un dispositif de protection et de recouvrement de type tamis, qui empêche l'accès à des pièces de machines notamment entraînées et qui est disposé au-dessus des pièces de machines notamment entraînées dans la région inférieure du réservoir, **caractérisé en ce que** le dispositif de protection et de recouvrement de type tamis (10), au moins sur son côté supérieur, est courbé vers le haut dans sa région de surface.

2. Réservoir pour un épandeur agricole, comprenant un dispositif de protection et de recouvrement de type tamis selon la revendication 1, **caractérisé en ce que** le dispositif de protection et de recouvrement de type tamis (10) présente, au moins sur son côté supérieur, au moins approximativement la forme d'une section sphérique.

3. Réservoir pour un épandeur agricole, comprenant un dispositif de protection et de recouvrement de type tamis selon au moins l'une quelconque des revendications précédentes, **caractérisé en ce que** le dispositif de protection et de recouvrement de type tamis (10) est réalisé au moins approximativement sous forme voûtée.

4. Réservoir pour un épandeur agricole, comprenant un dispositif de protection et de recouvrement de type tamis selon au moins l'une quelconque des revendications précédentes, le dispositif de protection et de recouvrement de type tamis (10) présentant des nervures (12) s'entrecroisant entre les orifices (13), **caractérisé en ce que** la hauteur des nervures (12) est supérieure à leur largeur.
